(19) Europäisches Patentamt
European Patent Office
Office européen des brevets

(11) **EP 2 357 116 B1**

(12) **EUROPÄISCHE PATENTSCHRIFT**

(45) Veröffentlichungstag und Bekanntmachung des Hinweises auf die Patenterteilung:
**09.01.2013 Patentblatt 2013/02**

(51) Int Cl.:
***B60W 10/06*** *(2006.01)*  ***B60W 10/30*** *(2006.01)*
***B60W 30/18*** *(2012.01)*

(21) Anmeldenummer: **10190299.7**

(22) Anmeldetag: **08.11.2010**

(54) **Fahrzeug mit Hebewerkzeug**

Vehicle with lifter

Véhicule doté d'un chariot élévateur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.02.2010 DE 102010006942**

(43) Veröffentlichungstag der Anmeldung:
**17.08.2011 Patentblatt 2011/33**

(73) Patentinhaber: **CLAAS Industrietechnik GmbH 33106 Paderborn (DE)**

(72) Erfinder:
• **Mörsch, Claus**
  **33104, Paderborn (DE)**
• **Wollenschläger, Jens**
  **33442, Herzebrock-Clarholz (DE)**

(56) Entgegenhaltungen:
**EP-A1- 1 595 734    US-A- 5 967 756**
**US-B1- 6 405 844    US-B1- 7 399 255**

**Beschreibung**

Die vorliegende Erfindung betrifft ein Fahrzeug, insbesondere ein landwirtschaftliches Nutzfahrzeug, mit einem Verbrennungsmotor, einem Hebewerkzeug und einem Getriebe, das eingerichtet ist, die Leistung des Verbrennungsmotors auf ein Fahrwerk des Fahrzeugs, das Hebewerkzeug und ggf. andere Verbraucher zu verteilen. Die Erfindung betrifft insbesondere einen Traktor, der mit einem Front- oder Hecklader als Hebewerkzeug ausgestattet ist.

Ein derartiges Fahrzeug ist insbesondere aus DE 297 15 289 U1 bekannt.

Bei Fahrzeugen dieser Art regelt herkömmlicherweise ein Fahrregler die Drehzahl des Motors und die Übersetzung des Getriebes zwischen Motor und Fahrwerk entsprechend der Motorlast. Um bei niedriger Motorlast Kraftstoff zu sparen, wird bei niedriger Fahrgeschwindigkeit die Motordrehzahl heruntergeregelt. Dies kann zu Problemen bei der Handhabung von Lasten führen, denn wenn das Fahrzeug eine aufzunehmende Last anfährt und an dieser zu stehen kommt und infolgedessen die Motordrehzahl heruntergeregelt wird, kann es vorkommen, dass diese zur Handhabung der Last nicht mehr ausreicht oder allenfalls eine unwirtschaftlich langsame Handhabung der Last erlaubt.

Die EP-A-1 595 734 zeigt ein Fahrzeug mit einem Verbrennungsmotor einem die Leistung des Verbrennungsmotors auf ein Fahrwerk und auf ein Werkzeug (mittels Wellen) des Fahrzeugs verteilenden Getriebe und einem Fahrregler, der eingerichtet ist, in einem ersten Betriebszustand die Drehzahl des Verbrennungsmotors abhängig von der Fahrgeschwindigkeit des Fahrzeugs zu regeln, wobei der Fahrregler in einen zweiten Betriebszustand umschaltbar ist, in dem die Drehzahl unabhängig von der Fahrgeschwindigkeit über ein erstes Bedienelement steuerbar ist.

Im ersten Betriebszustand wählt der Bediener einen Gang aus und gibt anschliessend Gas, sodass die Drehzahl abhängig von der Fahrgeschwindigkeit geregelt wird. Der erste Betriebszustand kann gezielt ausgewählt werden. Das Umschalten in den zweiten Betriebszustand erfolgt mittels eines Schalters. In diesem Betriebszustand wird der Verbrennungsmotor mit einer Drehzahl Betrieben, die der Benutzer über ein Bedienelement einstellt. Derartige Ausführungen haben unter anderem den Nachteil, dass der Fahrer stets bewusst einen bestimmten Betriebszustand auswählen muss.

Aufgabe der vorliegenden Erfindung ist, ein Fahrzeug der eingangs angegebenen Art zu schaffen, das sowohl einen Kraftstoff sparenden Fahrbetrieb bei niedrigen Geschwindigkeiten als auch eine effiziente Handhabung von Lasten ermöglicht.

Die Aufgabe wird gelöst, indem bei einem Fahrzeug mit einem Verbrennungsmotor, einem die Leistung des Verbrennungsmotors auf ein Fahrwerk und auf ein Hebewerkzeug des Fahrzeugs verteilenden Getriebe und einem Fahrregler, der eingerichtet ist, in einem ersten Betriebszustand die Drehzahl des Motors abhängig von der Fahrgeschwindigkeit des Fahrzeugs zu regeln, der Fahrregler ferner in einen zweiten Betriebszustand umschaltbar ist, in dem die Drehzahl unabhängig von der Fahrgeschwindigkeit über ein erstes Bedienelement steuerbar ist. Erfindungs gemäß ist der Fahrregler eingerichtet, um bei unbetätigtem erstem Bedienelement den ersten Betriebszustand einzunehmen und im zweiten Betriebszustand die Drehzahl entsprechend dem Ausmaß der Betätigung des Bedienelements (12) anzuheben. So ist das erste Bedienelement allein ausreichend, um die Umschaltung in den zweiten Betriebszustand und eine bedarfsgerechte Steuerung der Drehzahl im zweiten Betriebszustand zu ermöglichen. Während somit im dem normalen Fahrbetrieb ohne Lasthandhabung entsprechenden ersten Betriebszustand die Drehzahl bei niedriger Fahrgeschwindigkeit oder im Stand Kraftstoff sparend reduziert werden kann, wird dem Fahrer durch Umschalten in den zweiten Betriebszustand die Möglichkeit gegeben, eine hohe Drehzahl aufrecht zu erhalten, die eine sichere und effiziente Handhabung von Lasten insbesondere bei niedriger Fahrgeschwindigkeit ermöglicht.

Bei diesem ersten Bedienelement kann es sich vorzugsweise um ein Pedal handeln. Speziell ein herkömmlicherweise bei vielen landwirtschaftlichen Fahrzeugen vorhandenes Kupplungspedal kann auf diese Weise einen zusätzlichen Nutzen bekommen.

Einer zweiten Ausgestaltung zufolge ist der Fahrregler eingerichtet, die Stellung eines gleichen ersten Bedienelements im ersten Betriebszustand als eine Soll-Fahrgeschwindigkeit und im zweiten Betriebszustand als eine Soll-Drehzahl des Motors auszuwerten.

Bei diesem ersten Bedienelement kann es sich vorzugsweise um ein Pedal handeln, d.h. ein an sich bekanntes Gas- oder Fahrpedal bekommt im zweiten Betriebszustand die Funktion eines Bedienelements zum Einstellen der Motordrehzahl. Ein bei manchen landwirtschaftlichen Fahrzeugen zur Geschwindigkeitssteuerung vorgesehener Fahrhebel kann ebenfalls als erstes Bedienelement im Rahmen dieser Erfindung dienen.

Ein zweites Bedienelement kann zum Umschalten zwischen den zwei Betriebszuständen vorgesehen sein. Dieses zweite Bedienelement ist vorzugsweise zwischen einer dem ersten Betriebszustand entsprechenden Stellung und einer dem zweiten Betriebszustand entsprechenden Stellung kontinuierlich bewegbar.

Dies ermöglicht es, abrupte Sprünge der Drehzahl beim Umschalten zwischen erstem und zweitem Betriebszustand zu vermeiden, indem, wenn sich das zweite Bedienelement in einer Zwischenstellung zwischen der ersten und der zweiten Stellung befindet, der Fahrregler die Soll-Drehzahl für den Motor zwischen der Soll-Drehzahl im ersten Betriebszustand und der Soll-Drehzahl im zweiten Betriebszustand interpoliert. In analoger Weise kann eine abrupte Änderung der Soll-Geschwindigkeit des Fahrzeugs vermieden werden, indem, wenn sich das zweite Bedienelement in einer Zwischenstellung befindet, der Fahrregler eine Soll-Geschwindigkeit des Fahrzeugs zwischen derjenigen im ersten Betriebszustand und derjenigen im zweiten Betriebszustand interpoliert.

Die Soll-Drehzahl ist im zweiten Betriebszustand zweckmäßigerweise höher als im ersten.

Auch das zweite Bedienelement kann zweckmäßigerweise als Pedal ausgebildet sein. Vorzugsweise ist das zweite Bedienelement links von einem Lenkrad des Fahrzeugs angeordnet, ähnlich dem Kupplungspedal eines Kraftfahrzeugs, da der für den Fahrer wahrnehmbare Einfluss der Betätigung des zweiten Bedienelements ähnlich dem Einfluss der Kupplungsbetätigung bei einem PKW ist, obwohl der dem Motor mit dem Fahrwerk verbindende Teil des Getriebes, vorzugsweise ein stufenloses Getriebe mit Leistungsverzweigung, nicht notwendigerweise eine Kupplung umfasst.

Die vom Fahrregler im zweiten Betriebszustand zugrunde gelegte Soll-Geschwindigkeit des Fahrzeugs ist zweckmäßigerweise Null. Dies ermöglicht die Handhabung von Lasten einerseits bei stehendem Fahrzeug, andererseits aber auch, wenn sich das zweite Bedienelement in einer Zwischenstellung befindet, bei niedriger Fahrgeschwindigkeit..

Um einen unbeabsichtigten Übergang in den zweiten Betriebszustand zum verhindern, zum Beispiel wenn das Hebewerkzeug zeitweilig nicht am Fahrzeug montiert ist, kann ein drittes Bedienelement vorgesehen sein, welches zwischen einem Zustand, in welchem der zweite Betriebszustand gesperrt ist, und einem Zustand, der eine Umschaltung zwischen erstem und zweitem Betriebszustand erlaubt, umschaltbar ist.

Alternativ kann der Fahrregler eingerichtet sein, die Anwesenheit des Hebewerkzeugs zu erfassen und eine Umschaltung in den zweiten Zustand nur zu ermöglichen, wenn das Hebewerkzeug montiert ist.

Weitere Merkmale und Vorteile der Erfindung ergeben sich aus der nachfolgenden Beschreibung von Ausführungsbeispielen unter Bezugnahme auf die beigefügten Figuren. Es zeigen:

Fig. 1    eine schematische Ansicht eines Traktors als Beispiel für ein erfindungsgemäßes Fahrzeug;

Fig. 2    eine schematische Darstellung des Antriebssystems des Traktors gemäß einer ersten Ausgestaltung;

Fig. 3    eine graphische Darstellung des Zusammenhange zwischen der Stellung eines Kupplungspedals und der Soll-Drehzahl des Traktors gemäß einer ersten Ausgestaltung;

Fig. 4    eine graphische Darstellung der Abhängigkeit von Soll-Geschwindigkeit und Soll-Drehzahl des Traktors von der Stellung eines Bedienelements; gemäß einer zweiten Ausgestaltung, und

Fig. 5    ein zu Fig. 2 analoges Blockdiagramm gemäß einer dritten Ausgestaltung.

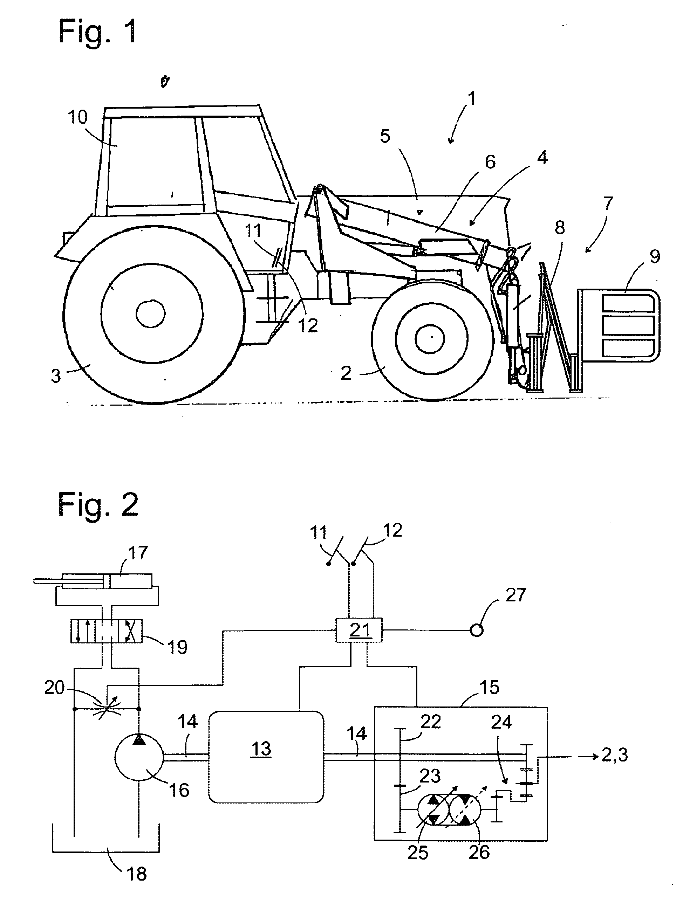

Fig. 1 zeigt eine schematische Seitenansicht eines Traktors, an dem die vorliegende Erfindung anwendbar ist. Ein Dieselmotor des Traktors 1 dient in an sich bekannter Weise einerseits zum Antreiben von Rädern 2, 3 und andererseits zum Abtreiben eines Hebewerkzeugs, hier eines Frontladers 4 mit zwei beiderseits des Motorgehäuses angeordneten, um eine horizontale Achse schwenkbaren und teleskopisch ausfahrbaren Armen 6, an denen im hier exemplarisch dargestellten Fall ein Vorsatz 7 zum Greifen und Handhaben von Silageballen montiert ist. Der Vorsatz 7 ist im hier dargestellten Fall um eine vertikale Achse schwenkbar an den Armen 6 montiert und umfasst einen ausstreckbaren Scherenmechanismus 8 sowie gegeneinander bewegbare Greiferbacken 9 zum Klemmen der Ballen. Der Vorsatz 7 könnte im Rahmen der vorliegenden Erfindung durch ein beliebiges anderes Werkzeug ersetzt sein. Anstelle des Frontladers 4 könnte auch ein Hecklader vorgesehen sein.

Am Boden einer Fahrerkabine 10 des Traktors 1 sind ein Fahrpedal 11 und ein Kupplungspedal 12 rechts bzw. links von einem (nicht dargestellten) Lenkrad montiert. Auf die Funktion dieser Pedale 11, 12 wird im Folgenden noch genauer eingegangen.

Fig. 2 zeigt eine schematische Darstellung des Antriebssystems des Traktors 1. An einer Abtriebswelle 14 eines Dieselmotors 13 sind einerseits ein stufenloses leistungsverzweigtes Getriebe 15 und andererseits eine Pumpe 16 angeschlossen. Über das Getriebe 15 sind die Räder 2, 3 antreibbar; das Kupplungspedal 12 steuert eine in Fig. 2 nicht dargestellte Kupplung, um in an sich bekannter Weise eine Umschaltung des Getriebes 15 zwischen Vorwärts- und Rückwärtsfahrt zu ermöglichen. Die Pumpe 16 versorgt hydraulische Stellglieder 17, welche die Bewegungen der Arme 6 oder des Vorsatzes 7 antreiben. Fig. 2 zeigt der Übersichtlichkeit halber nur ein einziges Stellglied 17; es versteht sich, dass die Pumpe 16 über geeignete Ventile mehrere dieser Stellglieder gleichzeitig oder nacheinander versorgen kann.

Ein Sauganachluss der Pumpe 16 ist mit einem Sumpf 18 verbunden. An einem Druckanschluss der Pumpe 16 ist einerseits über ein 3/2-Wegeventil 19 das Stellglied 17 und andererseits ein Drosselventil 20 angeschlossen, das niederdruckseitig wiederum mit dem Sumpf 18 verbunden ist. Im in Fig. 2 gezeigten sperrenden Zustand des Wageventils 19 ist das Stellglied 17 arretiert, und von der Pumpe 16 umgewälztes Öl fließt über das Drosselventil 20 direkt zum Sumpf 18 zurück. Das Drosselventil 20 ist steuerbar, um den Energieaufwand für die Umwälzung des öls zu minimieren, d.h. in der Sperrstellung des Wegeventils 19 ist der Öffnungsquerschnitt des Drosselventils 20 maximal. Wenn das Wegeventil 19. offen ist, bestimmt der am Drosselventil 20 eingestellte öffnungsquerschnitt die Verteilung des umgewälzten Öls zwischen Drosselventil 20 und Stellglied 17, d.h. die Geschwindigkeit des Stellglieds 17 hängt einerseits vom Durchsatz der Pumpe 16 und andererseits vom am Drosselventil 20 eingestellten Öffnungsquerschnitt ab.

Der Durchsatz der Pumpe 16 ist wiederum proportional zur Drehzahl des Dieselmotors 13. Diese Drehzahl wird von einem elektronischen Fahrregler 21 anhand der Stellung der Pedale 11, 12 festgelegt. Solange der Frontlader 4 nicht benutzt wird, ist das Kupplungspedal 12 unbetätigt, und der Fahrregler 21 regelt die Drehzahl des Motors 13 sowie die Übersetzung des stufenlosen Getriebes 15 so, dass eine der erfassten Stellung des Fahrpedals 11 zugeordnete Soll-Geschwindigkeit erreicht wird. Die Stufenlosigkeit des Getriebes 15 erlaubt es, eine vorgegebene Sollgeschwindigkeit durch beliebig viele Kombinationen von Drehzahl und Übersetzung zu realisieren, so dass zweckmäßigerweise jeweils diejenige Kombination gewährt wird, die die energieeffizienteste Fortbewegung ermöglicht.

Eine Konsequenz dieser Strategie ist, dass, wenn die Soll-Geschwindigkeit des Traktors 1 gegen Null geht, auch die Drehzahl des Motors 13 heruntergeregelt wird. Eine niedrige Drehzahl des Motors 13 hat jedoch zur Folge, dass auch die Pumpe 16 nur einen geringen Durchsatz erreicht, und dass der Frontlader 4 nur langsam arbeiten kann.

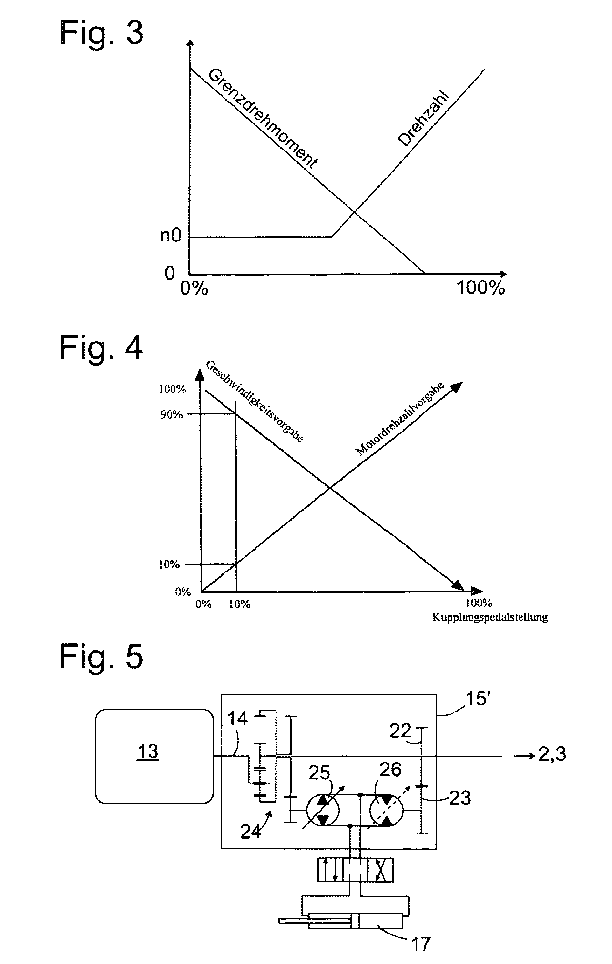

Um diesem Problem abzuhelfen, ist einer ersten Ausgestaltung der Erfindung zufolge der Fahrregler 21 eingerichtet, um im Falle einer Betätigung des Kupplungspedals 12 in einen Betriebszustand zu wechseln, dessen Besonderheiten im Folgenden anhand der Fig. 3 erläutert werden. Falls das stufenlose Getriebe 15 mehrere Fahrbereiche hat, zwischen denen ein Wechsel nur bei geöffneter Kupplung möglich ist, oder wenn der Traktor anstelle des stufenlosen Getriebes 15 ein Stufengetriebe mit mehreren Gängen aufweist, zwischen denen nur mit betätigtem Kupplungspedal 12 umgeschaltet werden kann, dann kann vorgesehen werden, dass der Wechsel in den zweiten Betriebszustand nur dann stattfindet, wenn die Geschwindigkeit des Traktors 1 unter einem Grenzwert liegt, der niedriger ist als eine typische Umschaltgeschwindigkeit zwischen den Fahrbereichen bzw. zwischen erstem und zweitem Gang.

Fig. 3 zeigt den Zusammenhand zwischen der Stellung des Kupplungspedals 12 und dem von der Kupplung ohne Rutschen maximal übertragbaren Drehmoment sowie der Soll-Drehzahl. Mit zunehmender Betätigung des Pedals 12 nimmt in dem Fachmann vertrauter Weise das Grenzdrehmoment ab. Sobald es so schwach ist, dass eine Drehzahlsteigerung den Traktor 1 nicht mehr signifikant beschleunigen kann, erhöht der Fahrregler 21 die Drehzahl über eine Leerlaufdrehzahl $n0$ hinaus, so dass, wenn die Kupplung vollständig offen ist und der Traktor 1 still steht, die zum Betrieb des Hebewerkzeugs 4 erforderliche Leistung zur Verfügung steht.

Einer zweiten Ausgestaltung der Erfindung zufolge dient das Kupplungspedal 12 zum Umschalten zwischen einem normalen Fahrbetriebsmodus und einem Betriebsmodus, in dem bei stehendem Traktor 1 die Motordrehzahl erhöht ist, um das Hebewerkzeug zügig betreiben zu können: Während bei nicht betätigtem Kupplungspedal 12 die Sollgeschwindigkeit $v_s$ des Traktors 1 eine ansteigende Funktion f der Fahrpedalstellung $\theta$ ist,

$$v_D = f(\theta),$$

ist sie bei vollständig getretenem Kupplungspedal 12 unabhängig von der Stellung des Fahrpedals 11 Null. Bei teilweise getretenem Kupplungspedal 12 gilt

$$v_s = (1-\varphi) f(\theta),$$

wobei $\varphi$ das auf das Intervall [0, 1] normierte Ausmaß der Betätigung das Kupplungspedals 12 bezeichnet und der Wert 0 der Nichtbetätigung und der Wert 1 einem bis zum Anschlag durchgetretenen Kupplungspedal 12 entspricht.

Fig. 4 veranschaulicht diesen Zusammenhang graphisch: Die Sollgeschwindigkeit $v_s$, aufgetragen an der Ordinate des Diagramms, nimmt linear mit der Kupplungsbetätigung $\varphi$ ab. Im Gegenzug interpretiert der Fahrregler 21 bei vollständig durchgetretenem Kupplungspedal 12 ($\varphi=1$) die Stellung des Fahrpedals 11 als eine Vorgabe für eine Soll-Motordrehzahl $n_s$:

$$n_s = g_2(\theta).$$

Wenn man den Zusammenhang zwischen Fahrpedalbetätigung $\theta$ und Soll-Drehzahl $n_s$ bei unbetätigtem Kupplungspedal 12 ($\varphi=0$) mit $n = g_1(\theta)$ bezeichnet, dann gilt bei teilweise betätigtem Kupplungspedal:

$$n_s = (\varphi-1) g_1(\theta) + \varphi g_2(\theta).$$

Indem $g_2(\theta) > g_1(\theta)$ festgelegt wird, kann durch Treten des Kupplungspedals 12 die Motordrehzahl heraufgesetzt werden, ohne gleichzeitig die Fahrgeschwindigkeit zu erhöhten. Wenn ein Fahrer den Traktor 1 an eine zu handhabende Last heranfährt und dabei bei der Annäherung an die Last allmählich das Kupplungspedal 12 tritt, genauso wie er es bei einem üblichen Kraftfahrzeug mit Schaltgetriebe tun würde, um das Kraftfahrzeug vor der Last zum Stehen zu bringen, dann führt das Treten des Kupplungspedals 12 zu einer Verzögerung und schließlich zum Stillstand des Traktors 1, gleichzeitig aber zu einer Drehzahlsteigerung, die einen hohen Durchsatz der Pumpe 16 bewirkt und infolge dessen einen zügigen, effizienten Betrieb des Frontladers 4 erlaubt.

Um Fehler bei der Handhabung des Kupplungspedals 12 zu verhindern, kann zweckmäßigerweise ein Sensor 27 zur Erfassung des Vorhandenseins oder Nichtvorhandenseins des Vorsatzes 7 an den Armen 6 vorgesehen sein, der mit dem Fahrregler 21 verbunden ist, um einen Übergang in den zweiten Betriebszustand zu unterbinden, wenn der Vorsatz 7 nicht montiert ist. In diesem Fall ignoriert der Fahrregler 21 jede Betätigung des Kupplungspedals 12.

Alternativ kann das Bezugszeichen 27 auch ein in der Fahrerkabine montiertes weiteres Bedienelement bezeichnen, das durch den Fahrer betätig sein muss, damit der Fahrregler 21 auf eine Betätigung des Kupplungspedals 12 in der oben beschriebenen Weise reagiert.

Das Prinzip der Erfindung ist nicht auf das in Fig. 2 dargestellte Antriebssystem beschränkt. So kann beispielsweise das stufenlose Getriebe 15 der Fig. 2, bei dem eingangsseitig zwei miteinander kämmende Zahnräder 22, 23 eine Leistungsteilung zwischen einem mechanischen und einem hydraulischen Zweig mit fester Übersetzung bewirken und die zwei zweige ausgangsseitig über einen Planetensatz 24 wieder zusammengeführt werden, durch ein stufenloses Getriebe 15' mit antriebsseitigem Planetensatz 24 und ausgangeseitigem Zahnradpaar 22, 23, wie in Fig. 5 dargestellt, ersetzt werden.

Denkbar ist auch, wie ebenfalls in Fig. 5 dargestellt, das Stellglied 17 an den hydraulischen Zweig das Getriebes 15 bzw. 15' anzuschließen, so dass eine Pumpe 25 des hydraulischen zweigs wahlweise, vorzugsweise in kontinuierlich veränderlichen Anteilen, einen Hydraulikmotor 26 und das Stellglied 17 antreibt.

Bezugszeichen

1    Traktor

2    Rad

3    Rad

4    Frontlader

5    Gehäuse

6    Arm

7    Vorsatz

8    Scherenmechanismus

9    Greiferbacken

10   Fahrerkabine

11   (Fahr-) Pedal

12   (Kupplungs-)Pedal

13   Dieselmotor

14   Abtriebswelle

15   Stufenloses Getriebe

16   Pumpe

17   Hydraulisches Stellglied

18   Sumpf

19   Wegeventil

20   Drosselventil

21   Fahrregler

22   Zahnrad

23   Zahnrad

24   Planetensatz

25   Pumpe

26   Hydraulikmotor

27   Sensor/Bedienelement

**Patentansprüche**

1.  Fahrzeug mit einem Verbrennungsmotor, einem die Leistung des Verbrennungsmotors auf ein Fahrwerk (2, 3) und auf ein Hebewerkzeug (4) des Fahrzeugs (1) verteilenden Getriebe (14-16) und einem Fahrregler (21), der eingerichtet ist, in einem ersten Betriebszustand die Drehzahl des Verbrennungsmotors abhängig von der Fahrgeschwindigkeit des Fahrzeugs (01) zu regeln, **dadurch gekennzeichnet, dass** der Fahrregler (21) in einen zweiten Betriebszustand umschaltbar ist, in dem die Drehzahl unabhängig von der Fahrgeschwindigkeit über ein erstes Bedienelement (11, 12) steuerbar ist und der Fahrregler (21) eingerichtet ist, um bei unbetätigtem erstem Bedienelement (12) den ersten Betriebszustand einzunehmen und im zweiten Betriebszustand die Drehzahl entsprechend dem Ausmaß der Betätigung des ersten Bedienelements (12) zu steuern.

2.  Fahrzeug nach Anspruch 1, **dadurch gekennzeichnet, dass** das erste Bedienelement (11, 12) eine Steuerung der Drehzahl entsprechend dem Leistungsbedarf des Hebewerkzeugs (4) ermöglicht.

3. Fahrzeug nach Anspruch 1 und 2, **dadurch gekennzeichnet, dass** das erste Bedienelement (12) ein Pedal, insbesondere ein Kupplungspedal, ist.

4. Fahrzeug nach Anspruch 1 oder 2, **dadurch gekennzeichnet, dass** der Fahrregler (21) eingerichtet ist, die Stellung des ersten Bedienelements (11) im ersten Betriebszustand als eine Soll-Fahrgeschwindigkeit und im zweiten Betriebszustand als eine Soll-Drehzahl des Verbrennungsmotors auszuwerten.

5. Fahrzeug nach Anspruch 4, **dadurch gekennzeichnet, dass** das erste Bedienelement (11) ein Pedal, Insbesondere ein Fahrpedal, oder ein Fahrhebel ist.

6. Fahrzeug nach einem der Ansprüche 1, 2, 4 oder 6, **dadurch gekennzeichnet, dass** ein zweites Bedienelement (12) zum Umschalten zwischen einer dem erstem Betriebszustand entsprechenden ersten Stellung und einer dem zweitem Betriebszustand entsprechenden zweiten Stellung kontinuierlich bewegbar ist.

7. Fahrzeug nach Anspruch 6, **dadurch gekennzeichnet, dass** der Fahrregler (21) eingerichtet ist, wenn sich das zweite Bedienelement (12) in einer Zwischenstellung zwischen der ersten und der zweiten Stellung befindet, die Soll-Drehzahl für den Verbrennungsmotor zwischen der Soll-Drehzahl im ersten Betriebszustand und der Soll-Drehzahl im zweiten Betriebszustand zu interpolieren.

8. Fahrzeug nach Anspruch 7, **dadurch gekennzeichnet, dass** die Soll-Drehzahl im zweiten Betriebszustand höher ist als die Soll-Drehzahl im ersten Betriebszustand.

9. Fahrzeug nach einem der Ansprüche 6 bis 8, **dadurch gekennzeichnet, dass** der Fahrregler (21) eingerichtet ist, wenn sich das zweite Bedienelement (12) in einer Zwischenstellung zwischen der ersten und der zweiten Stellung befindet, eine Soll-Geschwindigkeit des Fahrzeugs zwischen der Soll-Geschwindigkeit im ersten Betriebszustand und der SollGeschwindigkeit im zweiten Betriebszustand zu interpolieren.

10. Fahrzeug nach einem der Ansprüche 6 bis 9, **dadurch gekennzeichnet, dass** das zweite Bedienelement (12) ein Pedal, Insbesondere ein Kupplungspedal, ist.

11. Fahrzeug nach einem der vorhergehenden Ansprüche, **dadurch gekennzeichnet, dass** im zweiten Betriebszustand die Soll-Geschwindigkeit des Fahrzeugs Null ist.

12. Fahrzeug nach einem der vorhergehenden Ansprüche, **dadurch gekennzeichnet, dass** es ein drittes Bedienelement (27) umfasst, welches zwischen einem Zustand, in welchem der zweite Betriebszustand gesperrt ist, und einem Zustand, der eine Umschaltung zwischen erstem und zweitem Betriebszustand erlaubt, umschaltbar ist.

13. Fahrzeug nach einem der Ansprüche 1 bis 12, **dadurch gekennzeichnet, dass** das Hebewerkzeug (4) abmontierbar ist und der Fahrregler (21) eingerichtet ist, die Anwesenheit des Hebewerkzeugs (4) zu erfassen und eine Umschaltung in den zweiten Zustand nur in Anwesenheit des Hebewerkzeugs (4) zu ermöglichen.

14. Fahrzeug nach einem der vorhergehenden Ansprüche, **dadurch gekennzeichnet, dass** es ein Traktor ist.

**Claims**

1. A vehicle comprising an internal combustion engine, a transmission (14-16) distributing the power of the internal combustion engine to a chassis (2, 3) and to a lifting implement (4) of the vehicle (1), and a travel regulator (21) which is adapted to regulate the rotary speed of the internal combustion engine in dependence on the travel speed of the vehicle (01) in a first operating condition, **characterised in that** the travel regulator (21) can be switched over into a second operating condition in which the rotary speed is controllable independently of the travel speed by way of a first operating element (11, 12) and the travel regulator (21) is adapted to assume the first operating condition when the first operating element (12) is not actuated and to control the rotary speed in accordance with the extent of actuation of the first operating element (12) in the second operating condition.

2. A vehicle according to claim 1 **characterised in that** the first operating element (11, 12) permits control of the rotary speed in accordance with the power demand of the lifting implement (4).

3. A vehicle according to claim 1 and claim 2 **characterised in that** the first operating element (12) is a pedal, in particular a clutch pedal.

4. A vehicle according to claim 1 or claim 2 **characterised in that** the travel regulator (21) is adapted to evaluate the position of the first operating element (11) in the first operating condition as a target travel speed and in the second operating condition as a target rotary speed of the internal combustion engine.

**5.** A vehicle according to claim 4 **characterised in that** the first operating element (11) is a pedal, in particular a travel pedal or a travel lever.

**6.** A vehicle according to one of claims 1, 2, 4 and 5 **characterised in that** a second operating element (12) is continuously movable for switching over between a first position corresponding to the first operating condition and a second position corresponding to the second operating condition.

**7.** A vehicle according to claim 6 **characterised in that** the travel regulator (21) is adapted when the second operating element (12) is in an intermediate position between the first and second positions to interpolate the target reference speed for the internal combustion engine between the target rotary speed in the first operating condition and the target rotary speed in the second operating condition.

**8.** A vehicle according to claim 7 **characterised in that** the target rotary speed in the second operating condition is higher than the target rotary speed in the first operating condition.

**9.** A vehicle according to one of claims 6 to 8 **characterised in that** the travel regulator (21) is adapted when the second operating element (12) is in an intermediate position between the first and second positions to interpolate a target speed of the vehicle between the target speed in the first operating condition and the target speed in the second operating condition.

**10.** A vehicle according to one of claims 6 to 9 **characterised in that** the second operating element (12) is a pedal, in particular a clutch pedal.

**11.** A vehicle according to one of the preceding claims **characterised in that** in the second operating condition the target speed of the vehicle is zero.

**12.** A vehicle according to one of the preceding claims **characterised in that** it includes a third operating element (27) which can be switched over between a condition in which the second operating condition is blocked and a condition which permits switching-over between the first and second operating conditions.

**13.** A vehicle according to one of claims 1 to 12 **characterised in that** the lifting implement (4) can be dismounted and the travel regulator (21) is adapted to detect the presence of the lifting implement (4) and to permit switching-over into the second condition only in the presence of the lifting implement (4).

**14.** A vehicle according to one of the preceding claims **characterised in that** it is a tractor.

## Revendications

**1.** Véhicule doté d'un moteur à combustion, d'une transmission (14-16), qui répartit la puissance du moteur à combustion sur un châssis (2, 3) et sur un outil de levage (4) du véhicule (1), et d'un régulateur de marche (21) qui est conçu pour, dans un premier état de fonctionnement, réguler la vitesse de rotation du moteur à combustion en fonction de la vitesse de marche du véhicule (01), **caractérisé en ce que** le régulateur de marche (21) peut être commuté dans un deuxième état de fonctionnement dans lequel la vitesse de rotation peut être commandée indépendamment de la vitesse de marche au moyen d'un premier élément de commande (11, 12), et **en ce que** le régulateur de marche (21) est conçu pour adopter le premier état de fonctionnement quand le premier élément de commande (12) n'est pas actionné et, dans le deuxième état de fonctionnement, pour commander la vitesse de rotation en fonction du niveau de l'actionnement du premier élément de commande (12).

**2.** Véhicule selon la revendication 1, **caractérisé en ce que** le premier élément de commande (11, 12) permet de commander la vitesse de rotation en fonction du besoin de puissance de l'outil de levage (4).

**3.** Véhicule selon les revendications 1 et 2, **caractérisé en ce que** le premier élément de commande (12) est une pédale, en particulier une pédale d'embrayage.

**4.** Véhicule selon la revendication 1 ou 2, **caractérisé en ce que** le régulateur de marche (21) est conçu pour analyser la position du premier élément de commande (11) comme une vitesse de marche de consigne dans le premier état de fonctionnement et comme une vitesse de rotation de consigne du moteur à combustion dans le deuxième état de fonctionnement.

**5.** Véhicule selon la revendication 4, **caractérisé en ce que** le premier élément de commande (11) est une pédale, en particulier une pédale d'accélération, ou un levier d'accélération.

**6.** Véhicule selon une des revendications 1, 2, 4 ou 5, **caractérisé en ce qu'**un deuxième élément de commande (12) de la commutation entre une première position correspondant au premier état de fonctionnement et une deuxième position correspondant au deuxième état de fonctionnement est déplaçable de manière continue.

**7.** Véhicule selon la revendication 6, **caractérisé en ce que** le régulateur de marche (21) est conçu pour, quand le deuxième élément de commande (12) se trouve dans une position intermédiaire entre la première et la deuxième position, interpoler la vitesse de rotation de consigne du moteur à combustion entre la vitesse de rotation de consigne dans le premier état de fonctionnement et la vitesse de rotation de consigne dans le deuxième état de fonctionnement.

**8.** Véhicule selon la revendication 7, **caractérisé en ce que** la vitesse de rotation de consigne dans le deuxième état de fonctionnement est supérieure à la vitesse de rotation de consigne dans le premier état de fonctionnement.

**9.** Véhicule selon une des revendications 6 à 8, **caractérisé en ce que** le régulateur de marche (21) est conçu pour, quand le deuxième élément de commande (12) se trouve dans une position intermédiaire entre la première et la deuxième position, interpoler une vitesse de consigne du véhicule entre la vitesse de consigne dans le premier état de fonctionnement et la vitesse de consigne dans le deuxième état de fonctionnement.

**10.** Véhicule selon une des revendications 6 à 9, **caractérisé en ce que** le deuxième élément de commande (12) est une pédale, en particulier une pédale d'embrayage.

**11.** Véhicule selon une des revendications précédentes, **caractérisé en ce que**, dans le deuxième état de fonctionnement, la vitesse de consigne du véhicule est nulle.

**12.** Véhicule selon une des revendications précédentes, **caractérisé en ce qu'**il comprend un troisième élément de commande (27) qui est commutable entre un état dans lequel le deuxième état de fonctionnement est bloqué et un état qui autorise une commutation entre le premier et le deuxième état de fonctionnement.

**13.** Véhicule selon une des revendications 1 à 12, **caractérisé en ce que** l'outil de levage (4) est démontable et le régulateur de marche (21) est conçu pour détecter la présence de l'outil de levage (4) et ne permettre une commutation dans le deuxième état qu'en présence de l'outil de levage (4).

**14.** Véhicule selon une des revendications précédentes, **caractérisé en ce qu'**il s'agit d'un tracteur.

## Fig. 1

## Fig. 2

## Fig. 3

## Fig. 4

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29715289 U1

- EP 1595734 A